(19) Europäisches Patentamt
European Patent Office
Office européen des brevets

(11) **EP 3 440 024 B1**

(12) **EUROPÄISCHE PATENTSCHRIFT**

(45) Veröffentlichungstag und Bekanntmachung des Hinweises auf die Patenterteilung:
**19.05.2021  Patentblatt 2021/20**

(21) Anmeldenummer: **17721956.5**

(22) Anmeldetag: **05.04.2017**

(51) Int Cl.:
*C03C 11/00* (2006.01)        *C03B 19/08* (2006.01)
*A01N 59/16* (2006.01)        *A01P 1/00* (2006.01)

(86) Internationale Anmeldenummer:
**PCT/EP2017/000423**

(87) Internationale Veröffentlichungsnummer:
**WO 2017/174190 (12.10.2017 Gazette 2017/41)**

(54) **FARBSTABILES, ANTIMIKROBIELLES, PORÖSES GLASPULVER SOWIE VERFAHREN ZUR HERSTELLUNG EINES SOLCHEN BEI HOHEN TEMPERATUREN UND DESSEN VERWENDUNG**

COLOR-STABLE, ANTIMICROBIAL, POROUS GLASS POWDER AND PROCESS FOR PRODUCING SUCH A POWDER AT HIGH TEMPERATURES AND USE THEREOF

VERRE PULVÉRISÉ POREUX, ANTIMICROBIEN ET DE COULEUR STABLE, PROCÉDÉ DE FABRICATION D'UN TEL VERRE PULVÉRISÉ À HAUTE TEMPÉRATURE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2016   DE 102016003868**

(43) Veröffentlichungstag der Anmeldung:
**13.02.2019   Patentblatt 2019/07**

(73) Patentinhaber: **Trovotech GmbH**
**06766 Bitterfeld-Wolfen OT Wolfen (DE)**

(72) Erfinder:
• **FERNER, Uwe**
**"deceased" (DE)**

• **VOSS, Hans-Jürgen**
**79279 Vörstetten (DE)**
• **LUGNER, Hans-Udo**
**06808 Bitterfeld-Wolfen (DE)**

(74) Vertreter: **Köhler, Tobias**
**Patentanwälte**
**Tobias Köhler und Volkmar Müller**
**Kohlgartenstrasse 33-35**
**04315 Leipzig (DE)**

(56) Entgegenhaltungen:
WO-A1-2005/108316    WO-A1-2007/137823
WO-A2-2008/077590    WO-A2-2009/036862
DE-U1-202011 102 663    US-A1- 2010 004 111

EP 3 440 024 B1

**Beschreibung**

Die Erfindung betrifft ein farbstabiles, antimikrobielles Glaspulver, erhalten durch partiellen Ionenaustausch von Ammonium-Ionen bei Herstellungstemperaturen größer als 300 Grad Celsius. Bisher werden insbesondere Ammonium- Ionen als Farbstabilisator nur in Herstellungsprozessen im Temperaturbereich zwischen 90 und 110 Grad Celsius beschrieben.

Weiterhin betrifft die Erfindung mit dem farbstabilen, antimikrobiellen, porösen Glaspulver ausgerüstete Polymere, Silikone, Farben, Putze und Kosmetika sowie Formteile, Fasern und Folien aus den mit dem farbstabilen, antimikrobiellen Glaspulver ausgerüsteten Polymeren.

Es ist seit langem bekannt, dass Metallionen, insbesondere Silber-, Kupfer- und Zinkionen antimikrobielle Eigenschaften aufweisen.

Verschiedene Entwicklungen hatten das Ziel die Freisetzung von Silberionen zu steuern, um eine schnelle kurzfristige antimikrobielle Wirkung aber auch eine Langzeitwirkung zu erzielen.

Oberflächenvergrößerungen durch Einsatz von Silbernanopartikel zur besseren Silberionenfreisetzung oder Trägersysteme, in denen Silber zumindest teilweise bereits in ionischer Form vorliegt, sind zu nennen.

Lösliche Gläser, die Silberionen enthalten und Beschichtungen von Silberpartikeln zur Steuerung der Silberionenfreisetzung, wurden ebenfalls beschrieben.

Als Träger werden Zeolithe, Schichtsilikate, Calciumphosphat, Zirkoniumphosphat, Aluminiumphosphat, lösliches Glas, Titanoxid oder dergleichen verwendet.

Bekannt ist der Einsatz von Silbernanopartikel wie beispielsweise in der DE 101 46 050 A1 für Kleb- und Beschichtungsstoffe beschrieben.

Inzwischen gibt es jedoch gesundheitliche Bedenken gegenüber dem Einsatz von Silbernanopartikeln. Darüber hinaus sind Silbernanopartikel durch die ECHA, entsprechend der Biozidprodukte- Verordnung 528 /2012, nicht als biozider Wirkstoff auf der Article- 95- Liste notifiziert und dürfen von daher seit 01.September 2015 nicht mehr in der EU in Verkehr gebracht werden. Silber Phosphate Glass, und zu dieser Gruppe zählen auch die Zink-, Borat-, Silikatgläser, sind jedoch auf der Artikel 95 Liste als biozider Wirkstoff gelistet.

Im DE 1020 040 08 931 A1 wird die Verwendung von porösen Gläsern, Glaskeramiken, Glaspulvern oder Glaskeramikpulvern in kosmetischen und medizinischen bioziden Formulierungen beansprucht. Unter Anderem wird in diesem Patent auch die Verwendung von porösen Glaspulvern mit einem durchschnittlichen Porendurchmesser von 0,0005 $\mu$m - 500 $\mu$m und einer durchschnittlichen Partikelgröße von 500 nm bis 500 $\mu$m und einem Porendurchmesser-zu-Partikelgrößen-Verhältnis von < 0,2 mit und ohne Füllung in Bioziden oder als Biozid beansprucht.

Das poröse Glas kann dabei beispielsweise über ein metallorganisches bzw. anorganisches Sol-Gel-Verfahren, eine Phasenentmischung durch Temperung mit anschließendem Herauslösen einer Phase sowie durch einen Sinterprozess hergestellt werden.

Die in diesem Patent beschriebenen porösen Gläser werden jedoch nicht aus mittels Hochtemperaturextruder hergestelltem Glasschaum hergestellt. Es handelt sich zudem um andere Glaszusammensetzungen, denen kein Farbstabilisator zugesetzt wird.

In den Patentschriften DE 2020 05 006 784 U1 und DE 1020 050 13 857 A1 werden transparente poröse Sol-Gel-Schichten beansprucht, die mindestens eine antimikrobiell wirksame Substanz enthalten, wobei die antimikrobiell wirksame Substanz als Nanopartikel enthalten sein soll. Bevorzugt wird ein antimikrobielles Glas- oder Glaskeramik-Nanopulver, das Silber-, Zink-, oder Kupferoxid enthält. DE 1020 050 13 857 A1 beansprucht außerdem ein Verfahren zu dessen Herstellung und Verwendung.

Der Einsatz von Silber in phosphathaltigen, leicht löslichen Gläsern ist ebenfalls bekannt. So wird in der US 6 593 260 B2 der Einsatz von silberhaltigen Phosphatgläsern zur antibakteriellen Ausrüstung von Fasern, Zwirnen und Stoffen beschrieben. Dabei wird jedoch Silberoxid in die Glasrohstoffe eingemischt.

In DE 101 38 568 A1 wird der Einsatz eines Phosphor-Silikat-Glases, in dem Ag-, Cu- oder/und Zn-Ionen eingelagert sind in Polyestern beschrieben. Dabei erfolgt die Freisetzung der Metallionen jedoch ausschließlich durch Auflösung des Glases.

In den vorstehend beschriebenen Patenten wird zwar Silber, in der einen oder anderen Form als antimikrobieller Wirkstoff eingesetzt, jedoch werden keine Farbstabilisatoren eingesetzt.

In der DE 38 77 801 T2 wird eine abiotische Harzzusammensetzung beansprucht, bestehend aus einem Harz, mindestens einem abiotischen Zeolith und mindestens einem nicht im Zeolith enthaltenen weiteren Verfärbungshemmer.

Durch Ionenaustausch erhält der Zeolith Ammoniumionen als Farbstabilisator, indem im Zeolith vorhandene Ionen-austauschbare Ionen, wie z. B. Natriumionen vollständig oder teilweise durch Ammonium- und antibiotische Metallionen ersetzt werden. Dieser Ionenaustausch erfolgt, indem eine Ammoniumnitrat-Lösung und eine Silbernitratlösung auf dem Zeolith benetzt wird und anschließend bei einer Temperatur von 10 bis 70 Grad Celsius, vorzugsweise 40 bis 60 Grad Celsius für 3 bis 24 Stunden, vorzugsweise 10 bis 24 Stunden getempert wird.

In DE 10 2004 022 779 B4 wird ein Verfahren zur Herstellung von antimikrobiellem Glas mittels Extruder beschrieben. Dabei werden antimikrobielle Gläser oder bekannte Grundstoffe für antimikrobielle Gläser im Extruder eingeschmolzen und mit zusätzlichen Schwermetallen oder antimikrobiell wirkenden Substanzen gemischt und verschäumt.

Auch in diesem Patent werden keine Farbstabilisatoren als zusätzliches Additiv im Herstellungsprozess genannt.

In der Patentanmeldung "Verwendung eines Verfahrens zur Herstellung antibakterieller Gläser oder Glaskeramiken", DE 10 2006 026 033, wird die Herstellung antimikrobieller oder antibakterieller plättchenförmiger Glaspartikel aus Glasschaum beschrieben. Dabei werden im Extruder geschlossen- oder offenporige Glasschäume erzeugt und anschließend zerkleinert. Die im Zerkleinerungsprozess entstandenen Glaspartikel sollen durch einen anschließenden Ionenaustausch antimikrobiell oder antibakteriell werden oder ihre antimikrobielle oder antibakterielle Wirkung soll durch den Ionenaustausch verstärkt werden.

Es werden keine Glaszusammensetzungen aufgeführt und es wird nicht die Zugabe von Ammoniumverbindungen als Farbstabilisator angeführt. **Zudem handelt es sich um plättchenförmige Glaspartikel und es keine Hinweise auf eine Farbveränderung gegeben.**

Die WO 2008077590 A2 beschreibt ein Verfahren zur Herstellung eines mit Eisen, Kupfer und/oder Silber beladenen Zeolithmaterials. Dabei wird Verfahren vorgeschlagen, nach welchem das Zeolithmaterial in der Lösung belassen wird, bis das Zeolithmaterial mit einer bestimmten Menge an Metallionen beladen ist, bei einer Temperatur von 30 °C bis 100 °C erfolgt, vorzugsweise bei einer Temperatur von 40 °C bis 90 °C und besonders bevorzugt bei einer Temperatur von 60 °C bis 80 °C.

Auch hier wird das Herstellungsverfahren bei niedrigen Temperaturen durchgeführt.

Auch bekannt sind aus der WO 2005/108316 kleinste mikrobielle Glaspartikel und die Verwendung eines Verfahrens zur Herstellung derselben, bei dem antimikrobielle Gläser oder bekannte Grundstoffe für antimikrobielle Gläser geschmolzen, gebrochen oder pulverisiert einem Extruder zugegeben, in diesem auf- oder eingeschmolzen werden und nach dem Abkühlen werden, ohne das ein Farbstabilisator verwendet oder beschrieben wird

Die WO 2009/036862 beschreibt eine Zusammensetzung mit antimikrobieller Wirkung unter Verwendung von Silberionen und die US-Schrift 2010/0004111 schlägt vor, ein Verfärbung durch Zusatz von Ammoniumsalzen und die damit verbundene Komplexierung des Silbers zu unterbinden, ohne eine Herstellungsmethode zu beschreiben und oder Ansprüche daraus abzuleiten.

Edelmetalle wie Silber, Kupfer, Gold und deren Verbindungen verfügen aufgrund ihres oligodynamischen Effektes über eine gute antimikrobielle Wirkung.

Der Nachteil vieler edelmetallhaltiger antimikrobieller Ausrüstungen besteht darin, wie z. T. bei dem mit Silberionen dotiertem, porösen durch Hochtemperaturextrusion hergestellte Glaspartikel, dass der biozide Wirkstoff bzw. das Biozidprodukt zwar über eine gute antimikrobielle Langzeitwirkung verfügt, aber eine ausgeprägte Eigenfarbe bzw. zu Verfärbungen in der Anwendung führen kann, was die Anwendbarkeit dieser Wirkstoffe und Biozidprodukte erheblich einschränkt.

Bei Einsatz vieler antimikrobieller Silberprodukte kommt es zur Verfärbung der damit ausgerüsteten Polymere, Farben oder Putze. Ursache sind die Oxidation der Silberionen zum Silberoxid oder auch Reaktionen der Silberionen mit anderen Inhaltsstoffen der Anwendung. Bekannte Dispersionsfarben zeigen zum Beispiel eine deutliche Verfärbung im Feldtest.

Die Aufgabe bestand deshalb in der Entwicklung eines mit Silber dotiertem antimikrobiellen porösen Glaspulvers, welches die beschriebenen Nachteile des Standes der Technik beseitigt, und insbesondere eine Farbstabilität bei einer niedrigen Einsatzmenge des Farbstabilisators realisiert, und welches unter Einsatz eines wirtschaftlichen Verfahrens herzustellen ist.

Es wurde gefunden, dass diese Aufgabe gelöst wird durch antimikrobielle poröse Glaspartikel aus Borosilikatglas mit einem $Fe_2O_3$-Gehalt kleiner 0,2 Gew.-%, die mit Metallionen, wie Silber- und/oder Zink- und/oder Kupferionen und Ammoniumionen dotiert werden. Durch Freisetzung der antimikrobiell wirkenden Metallionen aus den Poren der Glaspartikel ergibt sich ein guter Kurzzeiteffekt und durch tiefer in den Poren und in der Glasmatrix eingelagerte Metallionen ergibt sich zudem ein ausgeprägter Langzeiteffekt der antimokrobiellen Wirkung.

Hierzu durchgeführte Versuche zeigten, dass eine antimikrobielle Wirkung eintrat.

Diese antimikrobielle Wirkung wurde von unabhängigen Prüfinstituten zertifiziert und führte u.a. auch zu folgenden Ergebnissen (Tabelle 1):

Tabelle 1: Keim- Reduktionsergebnisse der Firma Dr. Weßling Laboratorien GmbH Prüfbericht Nr. 6W5257 vom 25.04.2006

| Beispiele (0,1 Ma.-% im Wasser) | Inkubationszeit | KBE/ml Suspension im Ansatz in Abhängigkeit von der Inkubationszeit | | | | | |
|---|---|---|---|---|---|---|---|
| | | Staphylococcus aureus | Entero-coccus hirae | Pseudomona aeruginosa | Escherichia coli | Candida albicans | Aspergillus niger |
| | | Bakterien | gram-positiv | Bakterien | gram-negativ | Hefepilz | Schimmelpilz |
| Nullprobe | 0 h | $3.5 \times 10^4$ | $4.9 \times 10^5$ | $4.7 \times 10^6$ | $5.1 \times 10^4$ | $1.3 \times 10^4$ | $1.0 \times 10^5$ |
| TROVO®-powder K3 ohne Silber | 24 h | $6.3 \times 10^4$ | $2.4 \times 10^6$ | $1.0 \times 10^7$ | $1.0 \times 10^6$ | $2.4 \times 10^4$ | $1.5 \times 10^4$ |
| | 48 h | $1.2 \times 10^5$ | $4.0 \times 10^6$ | $> 10^7$ | $> 10^6$ | $2.4 \times 10^5$ | $1.2 \times 10^4$ |
| | 7 d | $> 10^6$ | $1.2 \times 10^7$ | $7.2 \times 10^7$ | $> 10^6$ | $4.0 \times 10^5$ | $1.8 \times 10^4$ |
| | 14 d | $> 10^6$ | $8.0 \times 10^6$ | $1.0 \times 10^8$ | $> 10^6$ | $1.0 \times 10^6$ | $2.8 \times 10^4$ |
| | 28 d | $> 10^7$ | $9.3 \times 10^5$ | $> 10^8$ | $> 10^7$ | $4.0 \times 10^6$ | $1.4 \times 10^4$ |
| TROVO®-guard K3-2 | 0 d | $3.5 \times 10^4$ | $4.9 \times 10^5$ | $4.7 \times 10^6$ | $5.1 \times 10^4$ | $1.3 \times 10^4$ | $1.0 \times 10^6$ |
| | 1 d | $1.0 \times 10^4$ | $1.6 \times 10^6$ | $< 100$ | $< 10$ | $4.0 \times 10^3$ | $2.2 \times 10^4$ |
| | | $2.4 \times 10^3$ | $1.6 \times 10^6$ | $< 10$ | | $2.0 \times 10^3$ | $1.3 \times 10^4$ |
| | 7 d | $90$ | $1.0 \times 10^4$ | | | $130$ | |
| | 14 d | $< 10$ | $150$ | $< 10$ | $< 10$ | $10$ | $100$ |
| | 28 d | $< 10$ | $< 10$ | $< 10$ | $< 10$ | $< 10$ | $< 10$ |
| TROVO® guard K3-5 | 0 d | $3.5 \times 10^4$ | $4.9 \times 10^6$ | $4.7 \times 10^6$ | $5.1 \times 10^4$ | $1.3 \times 10^4$ | $1.0 \times 10^5$ |
| | 1 d | $3.0 \times 10^3$ | $6.0 \times 10^5$ | $< 100$ | $20$ | $3.0 \times 10^3$ | $1.3 \times 10^4$ |
| | 2 d | $3.0 \times 10^3$ | $1.0 \times 10^6$ | $< 10$ | $< 10$ | $4.0 \times 10^3$ | $3.0 \times 10^3$ |
| | 7 d | $40$ | $500$ | $< 10$ | $< 10$ | $120$ | $2.2 \times 10^{43}$ |
| | 14 d | $< 10$ | $< 10$ | $<10$ | $< 10$ | $10$ | $140$ |

Bei der Dotierung der Glaspartikel mit den Metallionen werden zudem Ammoniumionen als Farbstabilisator eingesetzt, um eine Verfärbung der dotierten Glaspartikel sowie der späteren Anwendungen zu verhindern.

Die verwendeten Borosilikatgläser sollen außerdem einen geringen $Fe_2O_3$-Gehalt aufweisen, da durch diesen Inhaltsstoff bereits eine gelbbraune Färbung des Glases erfolgt.

Durch die Porosität der Glaspartikel wird eine wässrige Lösung aus den Metallsalzen und der Ammoniumionen -freisetzenden Verbindung von diesen aufgenommen. Eine Temperaturbehandlung erfolgt, um die Metallionen, vorzugsweise Silberionen und die Ammoniumionen teilweise gegen die Natriumionen der Glaspartikel auszutauschen und an den Porenwänden der Glaspartikel über Ionenbindungen zu fixieren. Im Weiteren werden mit Silber -dotierte Borosilikatglaspartikel betrachtet, wobei ebenso andere Schwermetalle eingesetzt werden können, insbesondere Zink und Kupfer.

Bei Einsatz von Silbersalzen soll der Silbergehalt der porösen Glaspartikel nach der Temperaturbehandlung 0,1 bis 10 Gewichtsprozent, vorzugsweise 0,5 bis 5 Gewichtsprozent, betragen.

Die mit Silber dotierten porösen Glaspartikel zeichnen sich durch eine schnelle Freisetzung der antimikrobiellen Silberionen aus den offenen Poren der Glaspartikeloberfläche für die Kurzzeitwirkung und einer diffusiven Freisetzung der Silberionen aus der Glasmatrix bzw. aus tieferen Poren der Glaspartikel für die antimikrobielle Langzeitwirkung aus.

Die farbstabilen, porösen, antimikrobiellen mit Silberionen beladenen Glaspartikel sollten nicht in Anwendungen eingesetzt werden, die freie Schwefel- oder Chloridonen enthalten. In diesen Fällen kommt es mit den Silberionen zur Ausbildung von unlöslichem oder schwerlöslichem Silbersulfid oder Silberchlorid und die antimikrobielle Wirkung wird abgeschwächt oder aufgehoben.

Als Ammoniumionenquelle können vorzugsweise wasserlösliche Salze wie Ammoniumnitrat, Ammoniumacetat oder Ammoniumsulfat eingesetzt werden.

Bevorzugt wird Ammoniumnitrat ($NH_4NO_3$) eingesetzt, ein Salz, das durch Neutralisation von Ammoniak mit Salpetersäure entsteht und sehr gut in Wasser löslich ist.

Als Quelle für die Silberionen können vorzugsweise wasserlösliche Silberverbindungen wie Silbernitrat, Silbersulfat, Silberperchlorat, Diaminsilbernitrat und Silberacetat eingesetzt werden.

Als Quelle für Kupferionen können vorzugsweise Kupferverbindungen wie Kupfer(II)nitrat, Kupfersulfat, Kupferperchlorat, Kupferacetat und Tetracyankupferkalium eingesetzt werden.

Als Quelle für Zinkionen können vorzugsweise Zinkverbindungen wie Zinknitrat, Zinkchlorat, Zinkthiocyanat und Zinkacetat eingesetzt werden.

Als Quellen anderer Metalle sind bevorzugt lösliche Salze geeignet.

Das farbstabile poröse antimikrobielle Glaspulver kann in Polymerformmassen, Silikondichtstoffen, Putzen, Farben oder Kosmetika mit 0,1 bis 20 Gew.-%, vorzugsweise 0,1 bis 5,0 Gew.-%, besonders bevorzugt 0,2 bis 2,0 Gew.-% eingesetzt werden, um eine antimikrobielle Ausrüstung zu erreichen.

Polymerformmassen im Sinne der Erfindung, die mit dem farbstabilen porösen antimikrobiellen Glaspulver ausgerüstet werden können, sind Homo- und Copolymere von olefinisch ungesättigten Monomeren wie Polyfluorethylen, Polyethylen, Polypropylen, Ethylene/Propylen-Copolymere, Polystyrole, Styrol/Acrylnitril-Copolymere, ABS-Copolymere, Vinylchlorid Homo- und Copolymere, Polyacrylate, Vinylacetat-Copolymere wie Ethylenvinylacetat, Polyacetate, Polycarbonate, Polyester und besonders Polyamide.

Ebenso im Sinne der Erfindung sind Compounds aus zwei oder mehreren der thermoplastischen Formmassen zu betrachten.

Es werden Polymerformmassen bevorzugt, deren Feuchtigkeitsaufnahme bei 23°C und 50 % relativer Luftfeuchtigkeit ≥0,2 Gew.-% beträgt.

In Polymerformmassen mit einer geringeren Feuchtigkeitsaufnahme kann ein antimikrobieller Effekt nur bei Fasern mit einem sehr geringen Durchmesser (bis maximal 20 μm) oder in Folien mit einer sehr geringen Dicke (bis max. 30 μm) erreicht werden. Es steht dann eine große spezifische Oberfläche zur Verfügung und die farbstabilen porösen antimikrobiellen Glaspartikel befinden sich an der Oberfläche oder in Oberflächennähe, womit eine Freisetzung der antimikrobiell wirkenden Metallionen auch ohne Feuchtigkeitsaufnahme möglich wird.

Als Komponenten können die erfindungsgemäßen thermoplastischen Formmassen auch kautschukelastische Polymerisate enthalten. Bevorzugt sind hier die so genannten Ethylen-Propylen- bzw. Ethylen-Propylen-Dien-Kautschuke (EPM- und EPDM-Kautschuk) zu nennen. Die EPM- und EPDM-Kautschuke können vorzugsweise auch mit reaktiven Carbonsäuren oder deren Derivaten gepfropft sein.

Die thermoplastischen Formmassen können weitere Hilfsstoffe wie Flammschutzmittel, Weichmacher, Nukleierungsmittel, Antistatika, Entformungs- und Gleitmittel, Fließ- und Verarbeitungshilfsmittel, Antioxidantien, Hitze- und Lichtstabilisatoren, Farbstoffe, Pigmente, Kopplungsmittel, wie verschiedene Silane, Antidrippingmittel wie Polytetrafluorethylen, Dispersionshilfsmittel wie Ethylenglykol, 1,2-Propandiol oder 1,3-Propandiol enthalten.

Die thermoplastischen Formmassen können auch Füllstoffe und Verstärkungsmittel, wie Glasfasern (Kurz-, Lang- oder Endlosfasern), Glaskugeln, Glaspulver, Glasgewebe, Glasmatten, Talkum, Feldspat, Quarz, Glimmer, Kaolin, Kreide, Calciumcarbonat, Magnesiumcarbonat, Titanoxid, Silikate wie Wollanstonit, Schichtsilikate, Tonminerale wie z.B. Bentonite, Montmorillonite, Hectorite, Saponite, gefällte, pyrogene, kristalline oder amorphe Kieselsäuren, Metalloxide und -hydroxide, Bariumsulfat, Fasern oder Mehle von Naturprodukten, synthetische Fasern, Kohlenstofffasern, Aramidfasern, Russ und Graphite enthalten ohne andere Füllstoffe auszuschließen. Die Füll- und Verstärkungsstoffe können auch oberflächenbehandelt sein.

Silikondichtstoffe beinhalten Acetatsysteme, Amin/Aminoxysysteme, Oximsysteme, Benzamidsysteme und Alkoxysysteme.

Eine antimikrobielle Wirkung kann gut in diffusionsoffenen Putzen, wie mineralische Putze auf Basis von Kalk, Gips oder Zement, Silikat- oder Silikonharzputzen, erreicht werden.

Farben können Fassadenfarben, wie Silikonharzfarben, Dispersions-Silikat-Farben, Reinacrylatfarben, Dispersionsacrylatfarben und silikatisierte Dispersionsfarben sein.

Farben können auch Innenwandfarben wie Silikatfarben, Kaseinfarben oder Latexfarben sein.

Die porösen Glaspartikel werden aus Glasschaum hergestellt. Dazu wird aus Glaspellets in einem Aufschmelztrichter eine Glasschmelze erzeugt, die dann in einem Extruder, vorzugsweise einem Einschneckenextruder, unter hydrostatischem Druck eingezogen wird. Die Glasschmelze wird in dem Extruder bei 800 bis 1000°C unter Druck mit Wasserdampf als Treibmittel vermischt. Es werden 1 bis 5 g Wasserdampf, bevorzugt 2 bis 4 g, pro kg Glasschmelze als Treibmittel eingesetzt.

Dabei werden Pellets aus einem Borosilikatglas mit der in Tabelle 2 dargestellten chemischen Zusammensetzung eingesetzt.

Tabelle 2: Chemische Zusammensetzung des Borosiliaktglases

| Oxide | Gehalt in Gew.-% |
|---|---|
| $Na_2O$ | 9,5 - 13,5 |
| $K_2O$ | 1,0 - 4,0 |
| $MgO$ | 0 - 2,0 |
| $CaO$ | 1,0 - 5,0 |
| $Al_2O_3$ | 4,0 - 7,0 |
| $SiO_2$ | 55,0 - 60,0 |
| $B_2O_3$ | 8,0 - 11,0 |
| $Fe_2O_3$ | < 0,2 |
| $ZnO$ | 2,0 - 5,0 |
| $BaO$ | 3,0 - 6,0 |
| $F_2$ | < 1,0 |

Die Ermittlung der chemischen Glaszusammensetzung (ISO 52340) erfolgt mittels Atom-Absorption-Spektroskopie oder

Röntgenfluoreszenz-Analyse.

Besonders bevorzugt beträgt die Verarbeitungstemperatur im Einschneckenextruder für diese Glaszusammensetzung 850 bis 920°C in den einzelnen Heizzonen.

Das eingesetzte Borosilikatglas soll einen $Fe_2O_3$-Gehalt kleiner 0,2 Gew.-% aufweisen, da sonst bereits durch den Eisengehalt eine Verfärbung der daraus erzeugten Glaspartikel auftritt.

An der Extruderaustrittsdüse, Durchmesser 2 bis 5 mm, erfolgt die Entspannung des Gemisches aus Glasschmelze und Treibmittel und es bildet sich ein feinporiger Glasschaum mit einer Dichte von 0,05 bis 0,30 $g/cm^3$, bevorzugt 0,10 bis 0,20 $g/cm^3$.

Der Glasschaumstrang wird nicht entspannt, sondern kühlt unter Einwirkung der Umgebungsluft ab. Er besteht aus geschlossenen Poren, die jedoch in Folge der schnellen Abkühlung teilweise aufbrechen. Dadurch zerfällt der Glasschaumstrang in unregelmäßige Bruchstücke. Im Weiteren werden die unregelmäßigen Bruchstücke in einem Walzenbrecher mit Lochsieb vorzerkleinert. Anschließend erfolgt die Mahlung (Kugelmühle) und Klassierung (Windradsichter) der vorgebrochenen Glasschaumstücke auf mittlere Partikelgrößen ($d_{50}$) zwischen 1 und 100 $\mu$m, bevorzugt zwischen 2 und 6 $\mu$m.

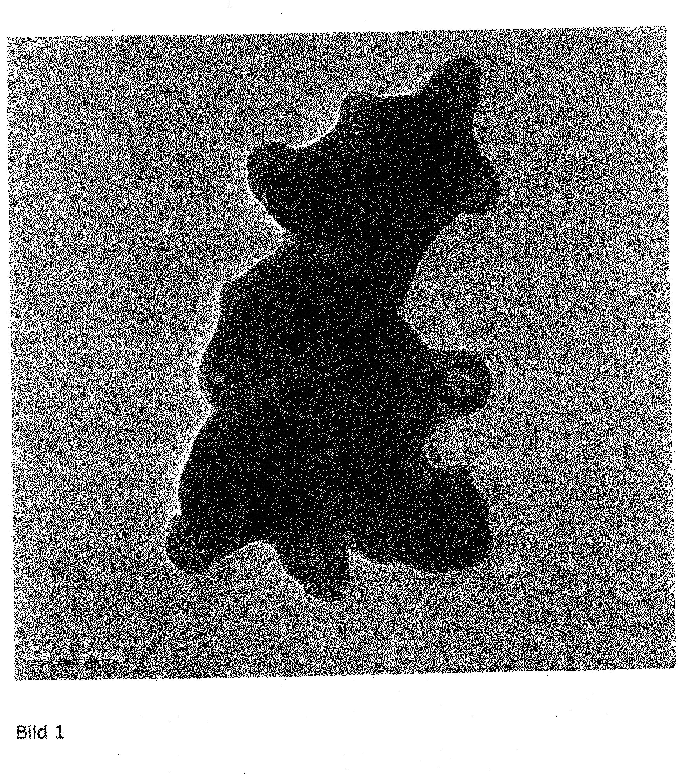

Die porösen Glaspartikel enthalten vorrangig Mesoporen (2 bis 50 nm), können jedoch auch Mikroporen (< 2 nm) und Makroporen (> 50 nm) enthalten. Bild 1 zeigt eine Transmissionseiektronenmikroskopaufnahme eines Glaspartikels, worin die Porengrößen deutlich sichtbar sind. Der dort dargestellte poröse Glaspartikel hat nur eine Größe von rund 350 nm, um die Poren mit dem Transmissionselektronenmikroskop deutlich erkennen zu können.

Das farbstabile antimikrobielle Glaspulver wird hergestellt indem:

-  2,0 bis 10,0 Gew.-% eines löslichen Metallsalzes, bevorzugt Silbernitrat, Zinkchlorid oder Kupferchlorid, gemeinsam mit 0,5 bis 10 Gew.-% einer wasserlöslichen Ammoniumverbindung, bevorzugt Ammoniumnitrat, in destilliertem Wasser gelöst werden,
-  80,0 bis 96,0 Gew.-% der porösen Glaspartikel in einen Mischer gegeben werden,
-  die Lösung des oder der Metallsalze und der Ammoniumverbindung in den Mischer eingedüst wird,
-  die Komponenten noch 10 bis 60 Minuten miteinander vermischt werden,
-  eine Temperaturbehandlung des Gemisches für 1 bis 120 Minuten bei 300 bis 330 °C erfolgt,
-  das temperaturbehandelte Gemisch abgekühlt wird und gegebenenfalls eine Trockenmahlung zur Deagglomeration der dotierten Partikel erfolgt.

Es können auch Metallsalze eingesetzt werden, die in anderen Lösungsmitteln löslich sind.
Die Metallionen werden dabei in die Poren der Glaspartikel eingelagert. Beim Einsatz von Silbernitrat und Ammoniumnitrat erfolgt außerdem ein partieller Ionenaustausch mit den Natriumionen der Glaspartikel.

Beispiele

Nachstehend wird die vorliegende Erfindung detailliert beispielhaft beschrieben, jedoch ist die Erfindung keinesfalls darauf beschränkt.

Herstellung der porösen Glaspartikel

Aus einem Borosilikatglas mit der beschriebenen chemischen Zusammensetzung wurde unter Einsatz von Wasserdampf (2,5 g pro kg Glasschmelze) als Treibmittel im Einschneckenextruder bei einer Glasschmelzetemperatur von 880 °C Glasschaum hergestellt.

Tabelle 3: Chemische Zusammensetzung des Borosilikatglases für das Beispiel

| Oxide | Gehalt in Gew.-% |
|---|---|
| $Na_2O$ | 9,91 |
| $K_2O$ | 2,91 |
| MgO | 0,57 |
| CaO | 2,52 |
| $Al_2O_3$ | 5,52 |
| $SiO_2$ | 57,7 |
| $B_2O_3$ | 10,9 |
| $Fe_2O_3$ | 0,12 |
| ZnO | 4,32 |
| BaO | 4,94 |
| $F_2$ | 0,42 |

Die Ermittlung der chemischen Glaszusammensetzung (ISO 52340) erfolgt mittels Atom-Absorption-Spektroskopie oder
Röntgenfluoreszenz-Analyse.
Anschließend erfolgte eine Vorzerkleinerung des Glasschaums in einem Walzenbrecher mit 7-mm-Lochsieb auf Glasschaumpartikel $\leq$ 7 mm. In einem anschließenden kombinierten Mahl- und Sichtungsprozess (Kugelmühle) erfolgt die Zerkleinerung auf eine mittlere Partikelgröße von 3,0 $\mu$m (Partikelgrößenverteilung: $d_{10}$ = 0,9 $\mu$m; $d_{50}$ = 2,9 $\mu$m; $d_{75}$ = 5,0 $\mu$m; $d_{90}$ = 7,2 $\mu$m und $d_{99}$ < 12,0 $\mu$m).

Die Ermittlung der Partikelgrößenverteilung erfolgte mittels Laserbeugung nach DIN ISO 1332-1. $D_{50}$ ist die Partikelgröße, bei der 50 Prozent der Partikel kleiner oder gleich dem angegebenen Wert sind. Die Bestimmung des pH-Wertes der porösen Glaspartikel erfolgte in einer 10%-igen wässrigen Suspension bei Raumtemperatur entsprechend DIN EN ISO 787-9. Abweichend zum Standard wurde das Eluat aus 10 g Glaspulver und 90 g destilliertem Wasser hergestellt. Anschließend wurden die Glaspartikel abfiltriert und vom Filtrat wurden pH-Wert und Leitfähigkeit gemessen mit dem pH-Labor-Kit mit Leitfähigkeitselektrode (Hach Lange GmbH) gemessen.

Der Feuchtegehalt der Glaspartikel wurde entsprechend ISO 787-2 nach 2 Stunden Trocknung im Umluftschrank bei 105°C ermittelt.

Für das in den Beispielen eingesetzte poröse Borosilikatglaspulver mit einem $d_{50}$ von 2,9 $\mu$m wurden folgende Werte ermittelt:

pH: 10,3
Leitfähigkeit: 0,7 mS/cm
Restfeuchte: 0,4 %.

Herstellung der farbstabilen, antimikrobiellen, porösen Glaspartikel

12,5 g Silbernitrat (reinst, zur Synthese, Silbergehalt 63,5 %) und 15 g Ammoniumnitrat) wurden in 14 ml destilliertem Wasser gelöst. Dies erfolgte mittels beheizbarem Magnetrührer, da der Lösevorgang stark endotherm verläuft.

237,5 g der porösen Glaspartikel mit einem $d_{50}$ von 2,9 $\mu$m wurden in einen Kunststoffbecher gefüllt. Mit einem Laborrührwerk wurden die porösen Glaspartikel bei geringer Geschwindigkeit (400 bis 600 min$^{-1}$) gemischt. Die Lösung aus dem Silbernitrat und dem Ammoniumnitrat wurde langsam in den Behälter mit den porösen Glaspartikeln eingetropft, wobei weiterhin gemischt wurde.

Nachdem die komplette Lösung zugegeben war, wurde noch weitere 10 Minuten gemischt.

Das Gemisch wurde auf einem Edelstahlblech gleichmäßig verteilt, wobei die Schichthöhe < 1cm betrug. Das befüllte Blech wurde mit einem Deckel abgedeckt und in den auf 330°C vorgeheizten Ofen geschoben. Nach Erreichen der Solltemperatur von 330°C verblieb das Blech noch 45 Minuten bei 330°C in dem Ofen. Das Blech wurde aus dem Ofen entnommen und nach einer Abkühlung von rund 30 Minuten konnten die farbstabilen, antimikrobiellen, porösen Glaspartikel vom Blech entnommen werden. Das getrocknete, farbstabile, antimikrobielle, poröse Glaspulver wurde dann in einer Zahnkolloidmühle KK 100 deagglomeriert.

Von den farbstabilen, antimikrobiellen, porösen Glaspartikeln wurden anschließend Eluate hergestellt. Abweichend zum Standard DIN EN ISO 787-14 wurde 10 g der Glaspartikel in 90 g destilliertem Wasser eluiert. Anschließend wurde die Glaspartikel abfiltriert und vor der Analyse ergänzend zentrifugiert, um Schwebstoffe abzutrennen. Vom Filtrat wurden pH-Wert und Leitfähigkeit gemessen mit dem pH-Labor-Kit mit Leitfähigkeitselektrode (Hach Lange GmbH).

Der pH-Wert des Filtrats betrug 7,9 und die Leitfähigkeit 10,0 mS/cm. Die Bestimmung des Silberionengehaltes im Eluat erfolgte mit dem Photometer DR 2800 (Hersteller Hach-Lange GmbH) und dem Küvettentest LCK 354. Der Silbergehalt im Eluat betrug 0,47 mg/l. Der Feuchtegehalt der farbstabilen, antimikrobiellen, porösen Glaspartikel wurde entsprechend ISO 787-2 nach 2 Stunden Trocknung im Umluftschrank bei 105 °C bestimmt und betrug 0,21 %.

Der Nachweis der Ammoniumionen in dem mit Silbernitrat und Ammoniumnitrat dotiertem Glaspartikel wurde qualitativ durch blaue Verfärbung eines Universalindikators und quantitativ mittels eines Küvettentest nach der Standardmethode nach ISO 7150-1, DIN 38406 E5 durchgeführt.

**Versuchsbeschreibung der qualitativen Ammoniumionen Bestimmung:**

In einem Uhrglas wird das Produkt vorgelegt. In einem zweiten Uhrglas wird pH-Papier mit einigen Tropfen Wasser eingeklebt. Durch Zugabe einiger Tropfen conz. Natriumhydroxidlösung wird das Uhrglas mit dem pH-Papier über das andere Glas gestülpt (Simulation einer Mikrogaskammer). Nach kurzer Zeit verfärbt sich das pH-Papier zum basischen Bereich (in vorliegendem Fall Blaufärbung).

Alle bisher analysierten Produkte in denen Ammoniumnitrat eingebracht wurde, zeigten eine positive qualitative Reaktion.

**Versuchsbeschreibung der quantitativen Ammoniumionen Bestimmung:**

Da Ammonium-Ionen sehr gut wasserlöslich sind, kam ein Küvetten-Test der Fa. Hach-Lange zur Anwendung. Der Küvetten-Test wird in 3 verschiedenen Konzentrationsstufen angeboten (47-130mg/l, 2,0-47,0 mg/l und 0,015-2,0 mg/l). Es handelt sich um eine Standardmethode nach ISO 7150-1, DIN 38406 E5-1. Das Prinzip dieser Messung ist, dass Ammoniumionen bei einem pH-Wert von 12,6 mit Hypochloritionen und Salicylationen in Gegenwart von Nitroprussid-Natrium als Katalysator zu Indophenolblau reagiert. Primäre Amine werden mit erfasst und ergeben Mehrbefunde.

Ein 10000-facher Überschuss an Harnstoff stört nicht.

Die Intensität der Indophenolblaufärbung wird mit einem Photometer DR 2800, ebenfalls von der Fa. Hach-Lange, gemessen.

Analysiert wird ein 10%iges wässriges Eluat, das nach Filtration und Zentrifugation in einer mit Strichcode versehenen Küvette der oben genannten chemischen Reaktion zugeführt wird.

Die ermittelten Werte sind in Tabelle 4 dargestellt. Dabei wird gezeigt, welche Ammoniumanteile in den einzelnen Produkten nachweisbar sind.

| Position | Probe | pH-Wert | LF | Ag+ | $NH_4$ | $NH_4NO_3$ | Temperzeit/ Temperatur | |
|---|---|---|---|---|---|---|---|---|
| | | | (mS/cm) | (mg/l) | (mg/l) | (g/Ansatz | Dauer | °C |
| | | | | | | | (min) | |
| | | | | | | | | |
| 1) | TROVOguard B-K3-040309 | 8,75 | 6,93 | 0,42 | 1,05 | 400 | 45 | 330 |
| | Charge Nr. 22-02-16-S40-An6-KR7-K3 | | | | | | | |
| | | | | | | | | |
| 2) | TROVOguard B-K3-040306 | 7,9 | 8,95 | 0,44 | 1,11 | 600 | 45 | 330 |
| | Charge Nr. 23-02-16-S42-An6-KR7-K3 | | | | | | | |
| | | | | | | | | |
| 3) | TROVOguard B-K3-040310 | 7,7 | 9 | 0,46 | 1,09 | 600 | 45 | 330 |
| | Charge Nr. 15-11-S35-An0-KR6-K3-ZnO10 | | | | | | | |
| | | | | | | | | |
| 4) | TROVOguard B-K3-040306 | 7,7 | 10 | 0,49 | 1,27 | 600 | 45 | 330 |
| | Charge Nr. 15-07-S35-An0-KR6-K3 | | | | | | | |
| | | | | | | | | |
| 5) | TROVOguard B-K2-040301 | 8,4 | 10,2 | 0,43 | 1,74 | 600 | 5 | 330 |
| | Charge Nr. 15-11-S39-An3-KR4-K2 | | | | | | | |

Entgegen den Lehrmeinungen und Diskussionen mit Chemikern kann in den mit Ammoniumnitrat bei Temperaturen von 330 Grad Celsius hergestellten modifizierten Glaspartikeln ein Anteil von 0,1 bis 0,2 % Ammoniumionen nachgewiesen werden, wobei bei kleineren Partikeln, vgl. Position 5 in Tabelle 4, ein Partikel mit der mittleren Partikelgröße von 2 μm ein höherer Ammoniumionenanteil als in den Positionen 1-4 der Varianten mit einer mittleren Partikelgröße von 3 μm festgestellt werden konnte. Bei kleineren Partikeln wird sowohl der Silberionen-Austausch als auch der Ammoniumionen-Austausch mit kürzeren Temperzeiten erzielt, aufgrund der größeren Oberfläche, die für den Austausch zur Verfügung stehen.

Vergleichsbeispiel ohne Ammoniumnitrat

Die Herstellung der im Vergleich eingesetzten nicht farbstabilen antimikrobiellen, porösen Glaspartikel erfolgte nach der gleichen Methode. Es wurde jedoch auf das Ammoniumnitrat verzichtet. In diesem Fall betrugen der pH-Wert des Eluats 9,9, die Leitfähigkeit 4,1 mS/cm und der Silbergehalt 0,35 mg/l. Die antimikrobielle Wirksamkeit dieses Produktes konnte bereits in einem Freilandtest im Putz über einen Zeitraum von rund 4 Jahren nachgewiesen werden, wobei jedoch eine starke Verfärbung des Putzes auftrat. In Fassadenfarben konnte die antimikrobielle Wirkung dieser silberdotierten, porösen Glaspartikel ebenfalls in einem Freilandtest über 24 Monate nachgewiesen werden, wobei jedoch ebenfalls eine starke Verfärbung auftrat.

Beispiel Farbtests in Putz

Die beanspruchten farbstabilen, antimikrobiellen, porösen Glaspartikel wurden mittels Laborrührwerk in einen Silikonharzputz in einer Konzentration von 1,0, 2,0 und 4,0 Gew.-% eingemischt (Muster V1.1, V1.2 und V1.3). Als Vergleich wurden die antimikrobiellen, porösen Glaspartikel des Vergleichs, ohne Ammoniumnitrat, ebenfalls in einer Konzentration von 1,0, 2,0 und 4,0 Gew.-% in den Silikonharzputz eingemischt (Muster V1, V2 und V3).
Als Vergleich für die Farbabweichungen diente ein Putzmuster ohne silberhaltige, antimikrobielle, poröse Glaspartikel (V0). Die Putzmuster wurden dann auf Kunststoffplatten aufgetragen, wobei die Schichtdicke ca. 2,0 mm betrug.
Die Proben wurden unterschiedlich gestresst, um daraus ein Langzeitverhalten abzuleiten. Beim ersten Probensatz erfolgte nur die Trocknung bei Umgebungstemperatur.
Ein zweiter Probensatz wurde 5 Wochen im Labor gelagert.
Beim dritten Probensatz wurden die Musterplatten im 90°-Winkel in Südrichtung aufgestellt und 10 Wochen den herrschenden klimatischen Verhältnissen ausgesetzt.
Ein vierter Probensatz wurde 10 Tage im QUV-Test bei hohen Temperaturen alternierend UV-Licht und Feuchtigkeit ausgesetzt. Dabei wurde eine Lampe eingesetzt, die die bestmögliche Simulation von Sonnenstrahlung im kritischen kurzwelligen UV-Bereich zwischen 365 nm und der solaren Energiegrenze von 295 nm realisiert. Die Strahlungsspitze lag bei 340 nm.
Der Farbvergleich erfolgte nach der Methode des CIELAB-Raums, um Farbdifferenzen zwischen einem Referenzmuster (V.0 - Nullprobe ohne silberhaltige Glaspartikel) und den Vergleichsmustern (Proben mit silberhaltigen Glaspartikeln und Proben mit silberhaltigen Glaspartikeln und Ammonium) zu ermitteln. Das zugrundeliegende Farbmodell ist in der EN ISO 11664-4 beschrieben.
Im Modell des CIELAB-Raumes gibt es drei Achsen, um Farbunterschiede mathematisch darzustellen. Die Helligkeitsachse L, die von L=0 für schwarz bis L=100 für weiß reicht und im Modell senkrecht zu den Farbachsen steht und durch den Nullpunkt geht. Die a-Achse (da-Wert) beschreibt den Grün- oder Rotanteil einer Farbe, wobei negative Werte für Grün und positive Werte für Rot stehen. Die b-Achse (db-Wert) beschreibt den Blau- oder Gelbanteil einer Farbe, wobei negative Werte für Blau und positive Werte für Gelb stehen.
Mit dE wird der Gesamtfarbabstand zwischen zwei Mustern mathematisch definiert als:

$$dE = \sqrt{dL^2 + da^2 + db^2}$$

In den Tabellen 5 und 6 handelt es sich beim Muster V.0 jeweils um das Vergleichsmuster des Putzes ohne antimikrobielles Glaspulver.
Diese Probe wurde im Interesse des Vergleichs jedoch ebenfalls den unterschiedlichen Lagerungen unterzogen und dann mit den anlog gelagerten Mustern mit dem silberdotierten Glaspulver verglichen.
Bei den Mustern V.1 bis V.3 in Tabelle 5 handelt es sich um den Putz, ausgerüstet mit den silberdotierten Glaspartikeln, die ohne Ammoniumnitrat hergestellt wurden (Vergleich).
Bei den Mustern 1.1 bis 1.3 in Tabelle 6 handelt es sich um Putz, ausgerüstet mit den silberdotierten Glaspartikeln, die mit Ammoniumnitrat hergestellt wurden. Es wurden jeweils Muster des Putzes mit 1,0, 2,0 und 4,0 Gew.-% der silberhaltigen Glaspartikel angemischt und auf Kunststoffplatten aufgetragen.

Tabelle 5: Farbunterschiede Putz mit silberdotiertem Glaspulver ohne Ammoniumnitrat (Vergleich)

| | | Farbunterschied zu Muster V.0 | | | |
|---|---|---|---|---|---|
| Bezeichnung | Gehalt silberdotiertes Glaspulver ohne Ammoniumnitrat | dE | dL | da | db |
| | | | | | |
| Prüfzustand | | Nach Trocknung | | | |
| Muster V.0 | ohne | | | | |
| Muster V.1 | 1% | 2,59 | -2,51 | 0,52 | -0,34 |
| Muster V.2 | 2% | 4,51 | -4,43 | 0,73 | -0,46 |
| Muster V.3 | 4% | 6,93 | -6,83 | 1,13 | -0,26 |
| | | | | | |
| Prüfzustand | | 5 Wochen Labor | | | |
| Muster V.0 | ohne | 0,14 | 0,13 | | -0,03 |
| Muster V.1 | 1% | 0,11 | -0,10 | | 0,04 |
| Muster V.2 | 2% | 0,24 | -0,13 | | 0,19 |
| Muster V.3 | 4% | 0,85 | -0,43 | | 0,71 |
| Prüfzustand | | 10 Wochen Wetter 90° | | | |
| Muster V.0 | ohne | 0,46 | -0,07 | | -0,45 |
| Muster V.1 | 1% | 2,31 | -1,75 | | 1,48 |
| Muster V.2 | 2% | 4,05 | -2,54 | | 3,12 |
| Muster V.3 | 4% | 5,18 | -3,34 | | 3,90 |
| | | | | | |
| Prüfzustand | | 10 Tage QUV 340 mm | | | |
| Muster V.0 | ohne | 0,20 | 0,19 | | -0,07 |
| | 1% | 5,54 | -2,25 | | 5,05 |
| Muster V.1 Muster V.2 | 2% | 8,31 | -3,54 | | . 7,44 |
| Muster V.3 | 4% | 9,38 | -4,64 | | 8,07 |

Tabelle 6: Farbunterschiede Putz mit silberdotiertem Glaspulver mit Ammoniumnitrat (Patentanspruch)

| | | Farbunterschied zu Muster V-0 | | | |
|---|---|---|---|---|---|
| Bezeichnung | Gehalt silberdotiertes Glaspulver mit Ammoniumnitrat | dE | dL | da | db |
| | | | | | |
| Prüfzustand | | Nach Trocknung | | | |
| Muster V.0 | Ohne | | | | |
| Muster 1.1 | 1% | 0,83 | -0,75 | 0,15 | 0,33 |
| Muster 1.2 | 2% | 1,13 | -1,06 | 0,22 | 0,35 |
| Muster 1.3 | 4% | 2,37 | -2,22 | 0,47 | 0,72 |

(fortgesetzt)

| Prüfzustand | | 5 Wochen Labor | | | |
|---|---|---|---|---|---|
| Muster V.0 | ohne | 0,05 | 0,01 | | 0,05 |
| Muster 1.1 | 1% | 0,08 | 0,06 | | 0,03 |
| Muster 1.2 | 2% | 0,20 | -0,17 | | 0,06 |
| Muster 1.3 | 4% | 0,38 | -0,37 | | -0,07 |
| | | | | | |
| Prüfzustand | | 10 Wochen Wetter 90° | | | |
| Muster V.0 | ohne | 0,42 | -0,17 | | -0,38 |
| Muster 1.1 | 1% | 0,23 | -0,17 | | 0,16 |
| Muster 1.2 | 2% | 1,23 | -0,32 | | 1,18 |
| Muster 1.3 | 4% | 2,51 | -0,34 | | 2,48 |
| | | | | | |
| Prüfzustand | | 10 Tage QUV 340 mm | | | |
| Muster V.0 | ohne | 0,31 | -0,28 | | 0,13 |
| Muster 1.1 | 1% | 0,33 | -0,25 | | 0,18 |
| Muster 1.2 | . 2% | 1,24 | -0,22 | | 1,21 |
| Muster 1.3 | 4% | 2,20 | -0,82 | | 2,04 |

Tabelle 7: Bewertungsskala für Farbabstände

| Größe des Farbunterschiedes | Bewertung |
|---|---|
| 0 | kein wahrnehmbarer Unterschied |
| 1 | sehr kleiner, gerade wahrnehmbarer Unterschied |
| 2 | kleiner, aber deutlich wahrnehmbarer Unterschied |
| 3 | mäßiger Unterschied |
| 4 | beträchtlicher Unterschied |
| 5 | sehr großer Unterschied |

Das Putz-Muster 1.1 bis 1.3 mit den Glaspartikeln, die unter Einsatz von Silbernitrat und Ammoniumnitrat hergestellt wurden, weisen deutlich geringere Farbabweichungen auf als die Muster V1 bis V3 mit den Glaspartikeln, die nur mit Silbernitrat hergestellt wurden.

Unter Berücksichtigung, dass Farbunterschiede erst bei einem Differenzwert von mindestens 1 (siehe Tabelle 7) durch das menschliche Auge wahrgenommen werden können, weisen alle Proben des Musters 1.1 keine sichtbaren Farbunterschiede auf. Teilweise liegen die Werte sogar unterhalb der Referenzwerte der Probe ohne silberhaltige Glaspartikel.

Die Einsatzmenge von 1,0 Gew.-% der farbstabilen, antimikrobiellen porösen Glaspartikel dieses Musters ist für die meisten Anwendungen ausreichend und entspricht einem Silberionengehalt im Putz von rund 300 ppm.

Bei den Mustern mit 2,0 und 4.0 Gew.-% des silberhaltigen Glaspulvers bestehen große Unterschiede zwischen den Vergleichsproben V2 und V3 einerseits und den Proben 1.2 und 1.3 andererseits. Die Verfärbung des Putzes durch die Silberionen steigt bei Verzicht auf Ammoniumnitrat um 100 bis 400 %.

Das im Beispiel erzeugte Muster der farbstabilen, antimikrobiellen, porösen Glaspartikel wurde einer Prüfung der Langzeitfreisetzung von Silberionen unterzogen, indem Mehrfacheluate hergestellt und analysiert wurden.

Das erste Eluat wurde aus 20 g farbstabilen, antimikrobiellen, porösen Glaspartikeln die in 180 g destilliertem Wasser aufgeschlämmt wurden hergestellt. Anschließend wurden die Glaspartikel abfiltriert und bei 105 °C 2 Stunden im Umluftschrank getrocknet. Das Filtrat wurde vor der Analyse zentrifugiert, um Schwebstoffe abzutrennen. Vom Filtrat wurden pH-Wert und Leitfähigkeit mit einem pH-Labor-Kit mit Leitfähigkeitselektrode (Hach Lange GmbH) gemessen.

Die Bestimmung des Silberionengehaltes im Filtrat erfolgte mit dem Photometer DR 2800 (Hersteller Hach-Lange GmbH) und dem Küvettentest LCK 354. Die getrockneten Glaspartikel wurden anschließend wieder im Massenverhältnis 1 : 9 in destilliertem Wasser eluiert, anschließend wurden die Glaspartikel wiederum abfiltriert und getrocknet. Es wurden insgesamt 5 Eluate nach diesem Schema hergestellt und untersucht.

Tabelle 8: pH-Wert und Leitfähigkeit der Mehrfacheluate der farbstabilen, antimikrobiellen, porösen Glaspartikel nach Patentanspruch

| Eluat-Nr. | Einsatzmenge | | Eluat | | |
|---|---|---|---|---|---|
| | farbstabile, antimikrobielle, poröse Glaspartikel | destilliertes Wasser | pH | Leitfähigkeit | Ag$^+$ |
| | in g | in g | | in mS/cm | in mg/l |
| 1 | 20,00 | 180,00 | 7,9 | 9,9 | 0,48 |
| 2 | 19,93 | 179,37 | 8,0 | 1,0 | 0,39 |
| 3 | 19,68 | 177,12 | 8,1 | 0,15 | 0,26 |
| 4 | 19,08 | 171,72 | 7,8 | 0,07 | 0,12 |
| 5 | 17,04 | 153,36 | 7,6 | 0,12 | 0,08 |

Die Silberionenfreisetzung aus den farbstabilen, antimikrobiellen, porösen Glaspartikeln ist auch nach 5 Eluaten noch hoch genug, um eine antimikrobielle Wirkung zu erzielen. In der Summe wurden bei den 5 Eluaten aus den 20 g farbstabilen, antimikrobiellen, porösen Glaspartikeln 0,235 g Silber freigesetzt. Bei einer rechnerischen Einsatzmenge von 0,635 g Silber wurden somit unter diesen extremen Versuchsbedingungen erst 37 % des Silbers freigesetzt, woraus sich eine antimikrobielle Langzeitwirkung ableiten lässt.

## Patentansprüche

1. Farbstabiles, antimikrobielles Glaspulver, erhalten durch partiellen Ionenaustausch bei einer Temperatur von 300 bis 350 °C und einer Austauschzeit von 1 bis 120 Minuten bestehend aus einer Mischung von:

   - porösen Glaspartikeln mit Mikroporen und Makroporen aus mittels Extrusion kontinuierlich geschäumtem Borosilikatglas mit einem $Fe_2O_3$-Gehalt < 0,2 Gew.-%, wobei der erhaltene Glasschaum anschließend mittels Trockenmahlung auf mittlere Partikelgrößen von 1,0 bis 8,0 $\mu$m zerkleinert wird,
   - Ammoniumnitrat, welches bei den angegebenen Prozessparametern 0,1 % bis 0,2% Ammoniumionen in den porösen Glaspartikeln bilden,
   - antimikrobielle Metallionen aus gelösten Metallsalzen, wobei die Metallionen Silber- und/oder Zink- und/oder Kupferionen sein können.

2. Verwendung eines farbstabilen, antimikrobiellen, porösen Glaspulvers nach Anspruch 1 in Polymeren, Silikonen, Farben, Putze oder Kosmetika mit einer Einsatzmenge von 0,1 bis 20,0 Gew.-%, mit welchem eine antimikrobielle Wirkung erzielt wird.

3. Verwendung eines farbstabilen, antimikrobiellen, porösen Glaspulvers nach Anspruch 2, wobei die Polymere aus zwei oder mehreren Polymeren gebildet werden oder kautschukelastische Polymerisate enthalten.

4. Verwendung des farbstabilen, antimikrobiellen, porösen Glaspulvers nach Anspruch 1 in den Ausgangsstoffen der Polymere, wie polymerisierbare oder vernetzbare Monomere oder polymerisierbaren oder vernetzbaren Präpolymeren oder polymerisierbaren oder vernetzbaren Polymeren.

5. Verwendung des farbstabilen, antimikrobiellen, porösen Glaspulvers nach Anspruch 1 in Polymeren nach Anspruch 2 mit einer Feuchtigkeitsaufnahme bei 23°C und 50 % relativer Feuchtigkeit ≥0,2 Gew.-%.

6. Mischung der Polymere nach Anspruch 2, 3 und 4, enthaltend weitere Füll-, Hilfs- und Farbstoffe.

7. Antimikrobiell ausgerüstete Formteile, Folie und Fasern, hergestellt aus den antimikrobiell ausgerüsteten Polymeren nach Anspruch 2.

8. Verwendung des farbstabilen, antimikrobiellen, porösen Glaspulvers nach Anspruch 1 in Farben und Putzen nach Anspruch 2, die diffusionsoffen sind.

9. Verwendung des farbstabilen, antimikrobiellen, porösen Glaspulvers nach Anspruch 1 in Silikonen nach Anspruch 2, unter Verwendung von Feuchtraumsilikone

10. Verfahren zur Herstellung eines Farbstabilen, antimikrobiellen Glaspulvers, **gekennzeichnet durch** partiellen Ionenaustausch bei einer Temperatur von 300 bis 350 °C und einer Austauschzeit von 1 bis 120 Minuten aus einer Mischung von:

- porösen Glaspartikeln mit Mikroporen und Makroporen aus mittels Extrusion kontinuierlich geschäumtem Borosilikatglas mit einem $Fe_2O_3$-Gehalt < 0,2 Gew.-%, wobei der erhaltene Glasschaum anschließend mittels Trockenmahlung auf mittlere Partikelgrößen von 1,0 bis 8,0 $\mu$m zerkleinert wird,
- Ammoniumnitrat als Farbstabilisator, weiches bei den Temperatur von 300 bis 350 °C und einer Austauschzeit von 1 bis 120 Minuten in den porösen Glaspartikeln 0,1 % bis 0,2% Ammoniumionen bilden,
- antimikrobielle Metallionen aus gelösten Metallsalzen, wobei die Metallionen Silber- und/oder Zink- und/oder Kupferionen sein können.

**Claims**

1. Color-stable, antimicrobial glass powder, obtained by partial ion exchange at a temperature of 300 to 350°C and an exchange time of 1 to 120 minutes comprising a mixture of:

- porous glass particles with micropores and macropores from borosilicate glass continuously foamed by extrusion with an Fe2O3 content < 0.2% by weight, whereby the glass foam obtained is then ground by dry milling to medium particle sizes of 1.0 to 8.0 $\mu$m,
- ammonium nitrate, which forms 0.1% to 0.2% ammonium ions in the porous glass particles using the specified process parameters,
- antimicrobial metal ions from dissolved metal salts, whereby the metal ions may be silver and/or zinc and/or copper ions.

2. Use of a color-stable, antimicrobial, porous glass powder according to claim 1 in polymers, silicones, paints, plasters, or cosmetics in a quantity of 0.1 to 20.0% by weight, with which an antimicrobial effect is achieved.

3. Use of a color-stable, antimicrobial, porous glass powder according to claim 2, whereby the polymers are formed from two or more polymers or contain rubber-elastic polymers.

4. Use of the color-stable, antimicrobial, porous glass powder according to claim 1 in the source materials of the polymers, such as polymerizable or cross-linkable monomers or polymerizable or cross-linkable prepolymers or polymerizable or cross-linkable polymers.

5. Use of the color-stable, antimicrobial, porous glass powder according to claim 1 in polymers according to claim 2 with a moisture absorption $\geq$ 0.2% by weight at 23°C and 50% relative humidity.

6. A mixture of the polymers according to claims 2, 3, and 4, comprising further fillers, additives, and dyes.

7. Antimicrobial molded parts, films, and fibers produced from the antimicrobial polymers according to claim 2.

8. Use of the color-stable, antimicrobial, porous glass powder according to claim 1 in paints and plasters according to claim 2, which are vapor-permeable.

9. Use of the color-stable, antimicrobial, porous glass powder according to claim 1 in silicones according to claim 2, using wet area silicones.

**10.** A process for the preparation of a color-stable, antimicrobial glass powder, **characterized by** partial ion exchange at a temperature of 300 to 350°C and an exchange time of 1 to 120 minutes from a mixture of:

- porous glass particles with micropores and macropores from borosilicate glass continuously foamed by extrusion with an Fe2O3 content < 0.2% by weight, whereby the glass foam obtained is then ground by dry milling to medium particle sizes of 1.0 to 8.0 $\mu$m,
- ammonium nitrate as a color stabilizer, which form 0.1% to 0.2% ammonium ions in the porous glass particles at temperatures of 300 to 350°C and an exchange time of 1 to 120 minutes, antimicrobial metal ions from dissolved metal salts, whereby the metal ions may be silver and/or zinc and/or copper ions.

**Revendications**

**1.** Poudre de verre antimicrobienne de couleur stable obtenue par échange d'ions partiel à une température de 300 à 350 °C et à un temps de remplacement de 1 à 120 minutes consistant en un mélange de:

- particules de verre poreuses ayant des micropores et des macropores à partir de verre borosilicate expansé en continu par extrusion à une teneur en Fe2O3 < 0,2 % en poids, la mousse de verre obtenue étant ensuite réduite par broyage à sec à des tailles de particules moyennes de 1,0 à 8,0 $\mu$m,
- nitrate d'ammonium, qui dans les paramètres du procédé indiqués forme 0,1 % à 0,2 % d'ions ammonium dans les particules de verre poreuses,
- ions métalliques antimicrobiens provenant de sels métalliques dissous, les ions métalliques pouvant être des ions d'argent et/ou de zinc et/ou de cuivre.

**2.** Utilisation d'une poudre de verre poreuse, antimicrobienne, de couleur stable selon la revendication 1 dans des polymères, des silicones, des peintures, des enduits ou des produits cosmétiques avec une quantité utilisée de 0,1 à 20,0 % en poids permettant d'obtenir un effet antimicrobien.

**3.** Utilisation d'une poudre de verre poreuse, antimicrobienne, de couleur stable selon la revendication 2, les polymères étant formés de deux ou plusieurs polymères ou comportant des polymères élastiques comme du caoutchouc.

**4.** Utilisation d'une poudre de verre poreuse, antimicrobienne, de couleur stable selon la revendication 1 dans les produits de départ des polymères tels que les monomères polymérisables ou réticulables ou les prépolymères polymérisables ou réticulables ou les polymères polymérisables ou réticulables.

**5.** Utilisation d'une poudre de verre poreuse, antimicrobienne, de couleur stable selon la revendication 1 dans des polymères selon la revendication 2 avec une absorption d'humidité à 23°C et 50 % d'humidité relative $\geq 0,2\%$ en poids.

**6.** Mélange de polymères selon les revendications 2, 3 et 4, contenant d'autres charges, adjuvants et colorants

**7.** Pièces moulées, feuilles et fibres antimicrobiens, fabriquées à partir de polymères antimicrobiens selon la revendication 2.

**8.** Utilisation de poudre de verre poreuse, antimicrobienne et de couleur stable selon la revendication 1 dans les peintures et les enduits selon la revendication 2, qui permettent la diffusion.

**9.** Utilisation de poudre de verre poreuse, antimicrobienne et de couleur stable selon la revendication 1 dans les silicones selon la revendication 2 en utilisant des silicones pour pièces humides.

**10.** Procédé de fabrication d'une poudre de verre antimicrobienne, de couleur stable, **caractérisé par** un échange d'ions partiel à une température de 300 à 350 °C et un temps de remplacement de 1 à 120 minutes, provenant d'un mélange de:

- particules de verre poreuses avec micropores et macropores à partir de verre borosillcate expansé en continu par extrusion avec une teneur de Fe2O3 < 0,2 % en poids, la mousse de verre obtenue étant ensuite réduite par broyage à sec à des tailles de particules de 1,0 à 8,0 $\mu$m,
- nitrate d'ammonium comme stabilisateur de couleur, qui à une température de 300 à 350 °C et un temps de remplacement de 1 à 120 minutes forme 0,1 % à 0,2 % d'ions ammonium dans les particules poreuses de verre,

- ions métalliques antimicrobiens provenant de sels métalliques dissous, les Ions métalliques pouvant être des Ions d'argent et/ou de zinc et/ou de cuivre.

50 nm

Bild 1

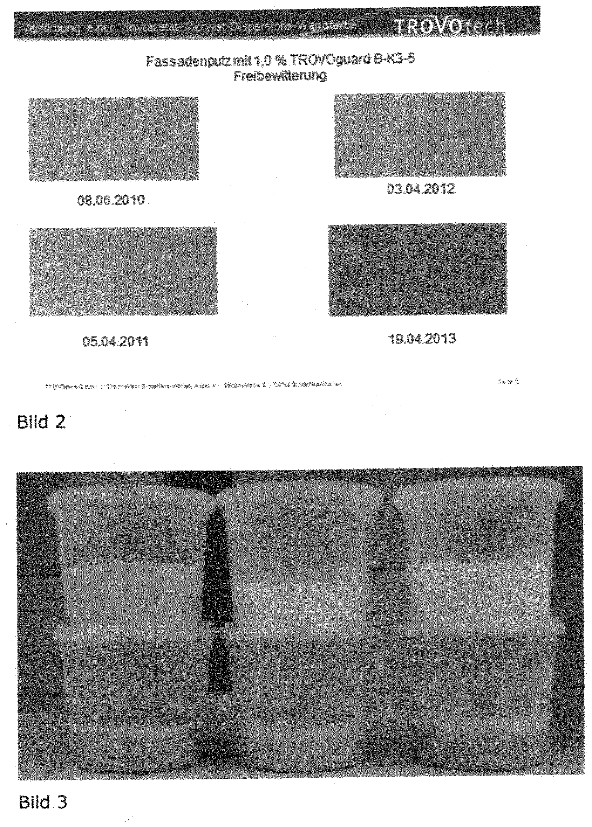

Bild 2

Bild 3

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10146050 A1
- DE 102004008931 A1
- DE 202005006784 U1
- DE 102005013857 A1
- US 6593260 B2
- DE 10138568 A1
- DE 3877801 T2
- DE 102004022779 B4
- DE 102006026033
- WO 2008077590 A2
- WO 2005108316 A
- WO 2009036862 A
- US 20100004111 A